# EUROPÄISCHE PATENTANMELDUNG

(11) **EP 1 221 750 A2**
(43) Veröffentlichungstag der Anmeldung: **10.07.2002**
(21) Anmeldenummer: 01440424.8
(22) Anmeldetag: 19.12.2001
(51) Int. Cl.: H02G 9/06, G02B 6/50, G02B 6/44

(54) **Kabelhalterung**

(30) Priorität: 09.01.2001 DE 10100647
(71) Anmelder: ALCATEL, 75008 Paris (FR)
(72) Erfinder: Nothofer, Klaus, 40699 Erkrath (DE); Dr. Leppert, Hans-Detlef, 41189 Monchengladbach (DE); Lysson, Hans-Jürgen, 41352 Korschenbroich (DE); Teschner, Wolfgang, 31515 Wunstorf (DE)
(74) Vertreter: Brose, Gerhard, Dipl.-Ing.

(57) **Zusammenfassung**

Die Erfindung betrifft eine Kabelhalterung innerhalb eines Rohres (1) mit mindestens einem an der Innenwand (2) des Rohres (1) befestigten Halteelement und mindestens einem an dem Halteelement befestigten Klemmelement (4) zur Aufnahme des Kabels (5) bzw. des Kabelbündels. Um eine einfache und sichere Halterung des Kabels bzw. des Kabelbündels auch bei stark gekrümmtem Kabelverlauf zu erreichen, ist vorgesehen, dass das Klemmelement (4) an dem Halteelement um eine radiale Achse des Rohres (1) drehbar befestigt ist.

## Beschreibung

Die Erfindung betrifft eine Kabelhalterung gemäß dem Oberbegriff des Anspruchs 1.

Eine gattungsgemäße Kabelhalterung ist aus der WO 99/42865 bekannt. Das Klemmelement zur Aufnahme des Kabels ist dabei klippartig mit zwei federnden Haltezungen ausgestattet und starr mit dem Halteelement verbunden. Bei dieser Anordnung besteht das Problem, dass Zug- und Biegekräfte, die beim Verlegen und beim Spannen des Kabels auftreten, zu einer mechanischen Überbeanspruchung des Kabels und/oder des Klemmelementes führen können. Außerdem kann das Kabel unbeabsichtigt aus dem Klemmelement herausgedrückt werden. Diese Nachteile sind insbesondere bei nicht achsparallel zum Rohr verlegbaren Kabeln und bei gekrümmten Rohren von Bedeutung. Häufig ist eine konsequent achsparallele Montage des Kabels wegen rohrinnenseitiger Einbauten oder peripherer Rohranschlüsse, insbesondere Verzweigungen, nicht möglich.

Der Erfindung liegt die Aufgabe zugrunde, diese Nachteile zu beseitigen und eine Kabelhalterung anzugeben, die auch bei stark gekrümmter, beispielsweise schraubenlinienförmiger, Kabellage relativ zu dem Rohrverlauf eine sichere und an die Kabelkrümmung anpassbare Befestigung des Kabels an der Rohrinnenseite gestattet.

Erfindungsgemäß wird die Aufgabe mit den kennzeichnenden Merkmalen des Anspruchs 1 gelöst. Durch die radial zum Rohr drehbare Befestigung des Halteelementes werden Kabelknickstellen bei gekrümmtem Kabelverlauf vermieden. Biege- und Zugkräfte werden besser aufgenommen. Die mechanische Belastung sowohl des Kabels als auch des Klemmelementes werden stark verringert. Es ist nicht erforderlich, einen achsparallelen Kabelverlauf anzustreben. Hindernisse innerhalb des Rohres können problemlos quasi umrundet werden.

Gemäß Anspruch 2 ist das Halteelement, auf dem mindestens ein Klemmelement drehbar befestigt ist, in den Innenumfang des Rohres einklemmbar. Auf diese Weise ergibt sich eine einfache Montage der Halteelemente, ohne die Rohrinnenwand durch Fixiermittel zu beschädigen oder zu schwächen. Die axialen Abstände der einklemmbaren Federelemente sind frei wählbar und müssen nicht vorabgeplant und durch entsprechende Bearbeitung der Rohrinnenseite vorbereitet sein. Dadurch sind auch Änderungen sowie fast den gesamten Rohrumfang einnehmende große Einbauten oder Verzweigungsstellen problemlos bezüglich der Kabelhalterung zu handhaben. Für mehrere Kabel bzw. Kabelbündel kann das Halteelement mit einer Vielzahl von Klemmelementen versehen sein.

Eine weitere Möglichkeit zur vorteilhaften Rohrinnenwandbefestigung des Halteelementes charakterisiert Anspruch 3. Bei dieser Verschraubungsvariante kann das Halteelement sehr klein ausgebildet sein, wodurch der Rohrinnenraum nur unwesentlich verkleinert wird. Prinzipiell kann das Klemmelement auch direkt an der Rohrfinnenwand drehbar befestigt sein.

Gemäß Anspruch 4 ist das Rohr als erdverlegbares Kanalisationsrohr mit peripheren Anschlüssen ausgebildet. Bei derartigen Kanalisationsrohren, die häufig auch zur Verlegung von Telekommunikationskabeln, Energieversorgungskabeln oder für innerhalb des Rohres verlegte kleinere Rohre zur Durchleitung flüssiger Medien genutzt werden, besteht ein Bedürfnis unberechtigte Manipulationen zu überwachen. Dazu können einzelne Glasfaserkabel an der Rohrinnenseite verlegt sein, welche an besonders sensiblen Stellen, insbesondere Öffnungsklappen, durch Dämpfungsänderungen im Falle der Manipulation als Indikator fungieren. Solche Glasfaserkabel müssen häufig in stark gekrümmter Anordnung montiert werden, wofür sich die oben beschriebene Kabelhalterung besonders eignet.

Die Erfindung wird nachfolgend anhand figürlicher Darstellungen näher erläutert. Es zeigen:
- Fig. 1: ein Rohr mit einer ersten Variante einer Kabelhalterung,
- Fig. 1a: einen vergrößerten Ausschnitt aus Fig. 1,
- Fig. 2: ein Rohr mit einer zweiten Variante einer Kabelhalterung,
- Fig. 2a: einen vergrößerten Ausschnitt aus Fig. 2 und
- Fig. 3: einen Längsschnitt durch ein Rohr mit einer Kabelanordnung.

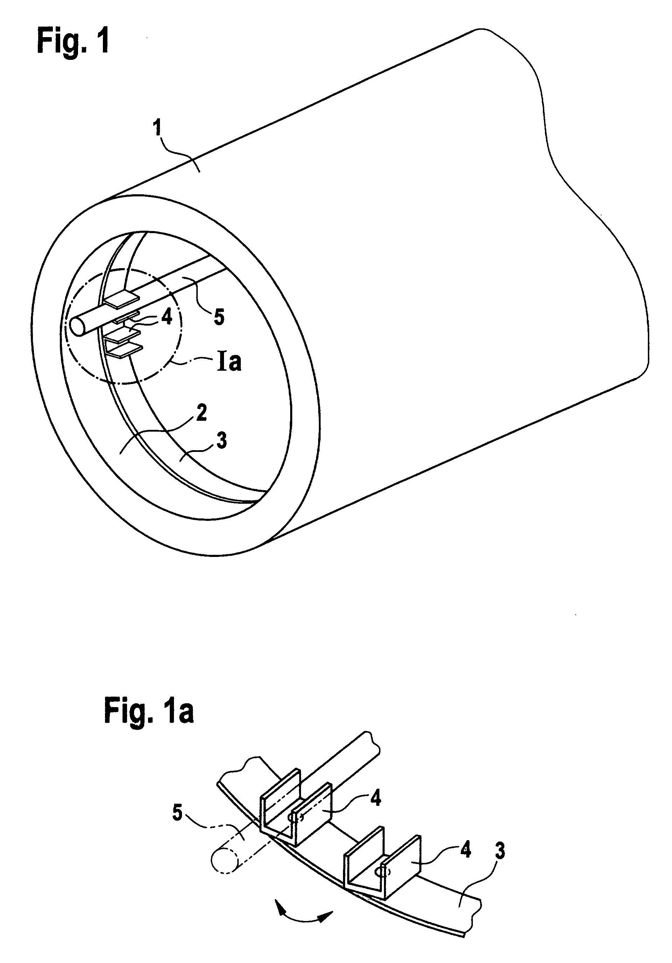

Fig. 1 zeigt ein Rohr 1, in dessen Innenwand 2 ein Halteelement in Form eines Federelementes 3 eingeklemmt ist. Auf dem Federelement 3 sind mehrere, nach innen abstehende Klemmelemente 4, von denen zwei dargestellt sind, zur Aufnahme eines Kabels 5 befestigt. Das Klemmelement 4 ist derart mit dem Federelement 3 verbunden, dass eine Drehbarkeit um eine radiale Rohrachse gegeben ist. Auf diese Weise ergibt sich eine einfache Anpassbarkeit der Kabelklemmstelle an jeglichen nicht achsparallelen Längsverlauf des zu verlegenden Kabels 5.

Fig. 1a zeigt im Detail ein Klemmelement 4, welches gegenüber dem Federelement 3 verdreht ist, um Knickstellen des Kabels 5 an der Klemmstelle zu vermeiden. Außerdem wird durch das verdrehte Klemmelement 4 eine gute Aufnahme von Zug- und Biegekräften erreicht und damit letztlich einem Herausspringen des Kabels 5 aus dem Klemmelement 4 vorgebeugt.

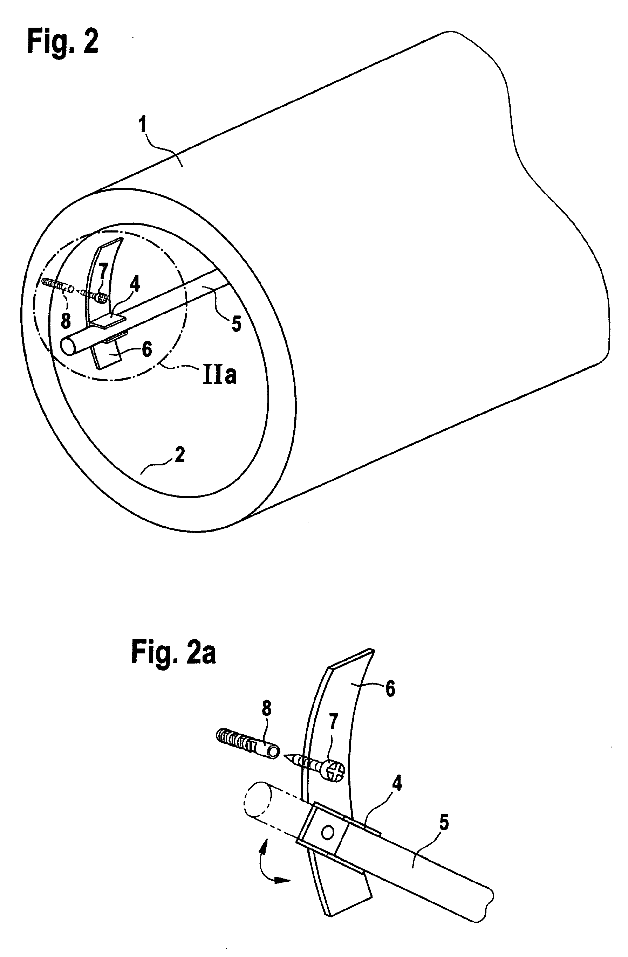

Die in den Fig. 2 und 2a dargestellte zweite Variante einer Kabelhalterung unterscheidet sich von der ersten Variante gemäß der Fig. 1 und 1a durch die Ausbildung des Halteelementes. Das in den Innenumfang des Rohres 1 einklemmbare Federelement 3 ist durch eine Halterung 6 ersetzt, die mittels Schraube 7 und gegebenenfalls Dübel 8 an der Innenwand 2 des Rohres 1 befestigt ist. Die Halterung 6 schränkt wegen ihrer Kleinheit den für andere Nutzung zur Verfügung stehenden Innenraum des Rohres 1 nur geringfügig ein.

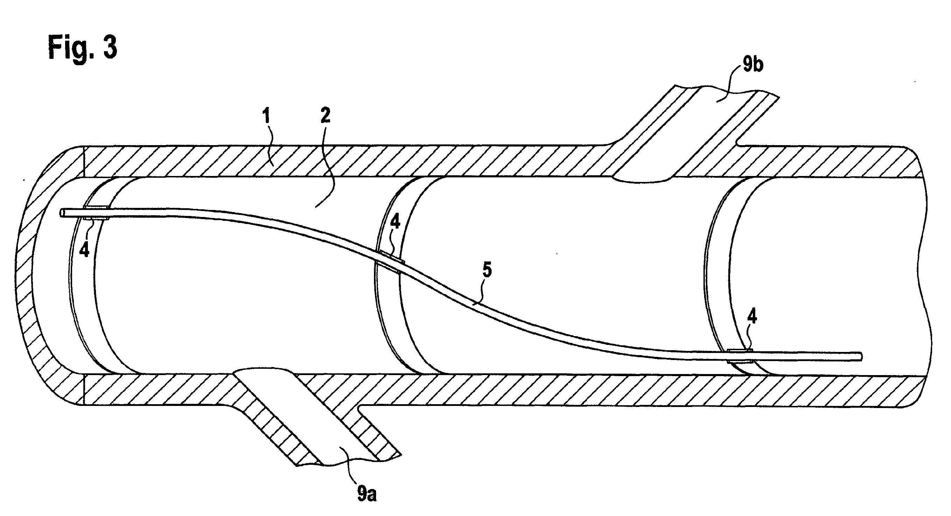

Aus Fig. 3 ist eine Kabelanordnung ersichtlich, bei der Rohrzuflüsse bzw. -abflüsse 9a und 9b quasi umgangen werden. Auch durch Rohreinbauten oder Hindernisse anderer Art kann sich die Notwendigkeit einer sehr gewundenen, wellenlinienförmigen oder auch schraubenlinienförmigen Verlegung des Kabels 5 ergeben. Die drehbaren Klemmelemente 4 passen sich dabei jeder Kabelrichtung an, auch wenn diese stark von der Rohrachsenrichtung abweicht.

Die Erfindung beschränkt sich nicht auf die vorstehend angegebenen Ausführungsbeispiele. Vielmehr ist eine Anzahl von Varianten denkbar, welche bei grundsätzlich andersgearteter Ausführung von den Merkmalen der Erfindung Gebrauch machen.

## Patentansprüche

1. Kabelhalterung innerhalb eines Rohres (1) mit mindestens einem an der Innenwand (2) des Rohres (1) befestigten Halteelement und mindestens einem an dem Halteelement befestigten Klemmelement (4) zur Aufnahme des Kabels (5) bzw. des Kabelbündels,
**dadurch gekennzeichnet,**
**dass** das Klemmelement (4) an dem Halteelement um eine radiale Achse des Rohres (1) drehbar befestigt ist.

2. Kabelhalterung nach Anspruch 1,
**dadurch gekennzeichnet, dass** das Halteelement als in die Innenwand (2) des Rohres (1) einklemmbares Federelement (3) ausgebildet ist.

3. Kabelhalterung nach Anspruch 1,
**dadurch gekennzeichnet, dass** das Halteelement in die Innenwand (2) des Rohres (1) einschraubbar ausbildet ist.

4. Kabelhalterung nach einem der vorangehenden Ansprüche,
**dadurch gekennzeichnet, dass** das Rohr (1) als erdverlegbares Kanalisationsrohr mit peripheren Anschlüssen, insbesondere Rohrzuflüssen bzw. -abflüssen (9a, 9b), ausgebildet ist.
